# EUROPEAN PATENT APPLICATION

(11) **EP 2 799 055 A1**
(43) Date of publication of application: **05.11.2014**
(21) Application number: 11879151.6
(22) Date of filing: 26.12.2011
(51) Int. Cl.: A61H 3/06, A61F 9/08

(54) **ASSISTANCE DEVICE**

(71) Applicant: Acciona Infraestructuras, S.A., 28108 Alcobendas (ES)
(72) Inventor: LÓPEZ SEGURA, Javier Luis, E-28108 Alcobendas (ES); RODRÍGUEZ SÁNCHEZ, Emilio, E-28108 Alcobendas (ES); CASTILLA WEEBER, Pedro Alejandro, E-28108 Alcobendas (ES); BURÓN MARTÍNEZ, José Luis, E-28108 Alcobendas (ES); ALOSO CEPEDA, Antonio, E-28108 Alcobendas (ES)
(74) Representative: Elzaburu S.L.P.
(86) International application number: PCT/ES2011/070904
(87) International publication number: WO 2013/098423

(57) **Abstract**

**A mobility assistance device** for persons who are partially or fully visually impaired; where the assistance device comprises a loop of parallel electrical guide conductors (12) arranged along a path where fully or partially visually impaired persons may walk in public areas; the loop conducts an AC current supplied by an AC current transmitter (11) so that a magnetic receiver (13) detects said magnetic field and supplies an information signal based on the measured magnetic field and the perceptive capacity of the fully or partially visually impaired person carrying the magnetic receiver; the transmitter (11) can modulate the signal that is generated in order to transmit information to the receiver (13).

## Description

### PURPOSE OF THE INVENTION

This invention refers to a mobility assistance device for persons who are partially or fully visually impaired.

### STATE OF THE ART

There are currently podotactile paved surfaces for guiding the visually impaired in public places.

In order for a podotactile paved surface to provide information to impaired blind person, both the podotactile paving and the person must maintain constant physical contact.

However, in heavily-trafficked public areas, there may be a lack of physical contact between the podotactile paving and the blind person moving within the public area. This absence of physical contact may cause the visually impaired to become disoriented.

There is therefore a need to provide a system for guiding and assisting partially and/or fully visually impaired persons, which provides them with information in situations where they are not in physical contact with a guidance system.

### SUMMARY

This invention seeks to resolve one or more of the aforementioned disadvantages by using a mobility assistance device for persons who are partially or fully visually impaired, as defined in the claims.

One aspect is to provide a mobility assistance device for persons who are partially or fully visually impaired, which, when implemented, will make it possible to provide guidance information to them as they move around public areas.

Another aspect is to supply an assistance device that provides simple, precise information adapted to the sensory capacity of the person carrying it

Yet another aspect of the assistance device is that said device must be easy to manufacture and install, while also being low-cost.

The assistance device comprises a loop of parallel electric conductor guides arranged along a path where fully or partially visually impaired persons can walk in public areas, where the loop is adapted to conduct an AC current supplied by an AC current transmitter; a magnetic receiver is adapted to supply an information signal based on the measured magnetic field and the perceptive capacity of the fully or partially visually impaired person carrying the magnetic receiver.

Yet another aspect of the assistance device is that it can be installed on the ground, on walls or on the ceiling of a public area through which the visually impaired person may be travelling.

A further aspect of the assistance device is that it is adapted to work together with other types of assistance and guidance systems for the visually impaired, of the podotactile and tactile type.

### BRIEF DESCRIPTIONS OF THE FIGURES

A more detailed explanation of the device in accordance with the embodiments of the invention is given in the following description based on the attached figures in which:
Figure 1 shows a block diagram of an assistance device comprised of a transmitter connected to guide conductor wires and a receiver that sends a notification signal,
Figure 2 shows a block diagram of a receiver,
Figure 3 shows a block diagram of an AC alternating current transmitter,

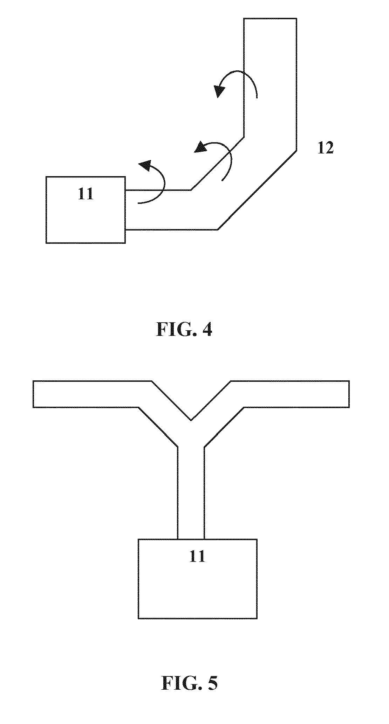

Figure 4 shows a diagram of a path of guide conductors comprised of a series of rectilinear and divided guide conductor segments, for example, comprised of a 45° rectilinear segment to help visually impaired persons make turns without become disoriented in a public area,
Figure 5 shows a diagram of a path of guide conductors comprising a series of rectilinear and broken guide conductor segments forming a bifurcation with the purpose of guiding visually impaired persons to or from a given location.

### DESCRIPTION OF A FORM OF EMBODIMENT

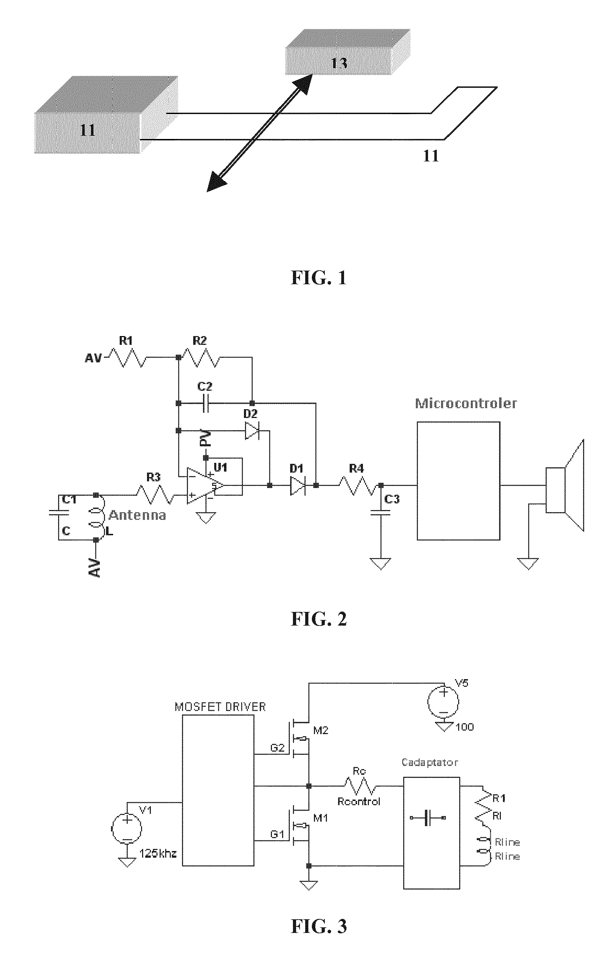

The embodiment in Figure 1 illustrates a mobility assistance device for persons who are partially or fully visually impaired, which comprises a transmitter 11 that generates an alternating current whose output terminals are connected to parallel electrical guide conductor materials 12 with electrical current in the opposite direction, i.e. each end of a single electrical lead wire 12 is connected respectively to an output terminal of the AC alternating current transmitter 11.

The AC transmitter 11 is adapted to supply an electrical current with a predetermined frequency, with the magnetic field associated with the generated electrical current being constant so that the conductor wire 12 acts as an antenna. Consequently, the magnetic field spreads through the space bordering on the electrical conductor wire 12 in the form of radio waves.

The transmitter 11 can modulate the signal that is generated in order to transmit predetermined information. This information can indicate, among other things, the origin and/or destinations of possible paths for visually impaired persons to follow.

The range of the radio waves that are generated depends on the amplitude of the electrical current that is generated; i.e. the greater the amplitude, the greater the propagation distance.

The conductor wires 12, i.e. parallel rectilinear guide conductors 12 through which the electrical current travels in opposite directions, are positioned along a path on which the visually impaired person wishes to travel in public places or spaces.

The guide conductors 12 form a circuit with electrical continuity or a loop that comprises a series of divided and rectilinear guide conductors arranged along the public space in which the partially or fully visually impaired persons may be travelling.

The guide conductors 12 are extended across the path to be followed separated from each other at a predetermined distance so that in the area included between the guide conductors 12 the magnetic fields that are generated are combined. The distance between the guide conductors 12 depends on the desired range, i.e. the less distance there is between the conductors 12, the more limited the range of the generated signal.

Likewise, due to symmetry, the magnetic field is the same on one side of the circuit as it is on the other, i.e. in the area outside each guide conductor 12 the value of the magnetic field is the same for a fixed current intensity and a predetermined distance of the guide conductor 12.

It should be noted that the guide conductors 12 are adapted to be installed on the ground, ceiling or walls of a public space, etc., such as public transport stations, airports, hospitals, etc.

In order to receive the generated magnetic field, the assistance device comprises a magnetic receiver 13 for receiving and measuring the magnetic field associated with the electrical current flowing through the guide conductors 12.

The magnetic receiver 13 comprises an antenna adapted for receiving the magnetic field that is generated, and it is connected to a measuring module with an output that is connected electronically to an output interface to provide an information signal adapted to the perceptive capacity of the partially or fully visually impaired person.

Likewise, the receiver 13 comprises a source of electrical power that supplies an electrical current to the receiver 13. The power source is of the battery, rechargeable battery or similar type.

The antenna is a resonant antenna electrically connected to an input terminal of the meter, which comprises an amplifier with the receiver antenna connected to an input terminal of the amplifier to reduce the power consumption of the receiver 13.

The assistance device, i.e. the magnetic field that is emitted, can be detected by the receiver 13 at long distances of over 8 metres, although this distance may be reduced, reducing the gain of the amplifier and thus providing greater spatial precision in the path followed by the visually impaired person.

The information signal associated with the magnetic field measured by the resonant antenna may be supplied by the output interface unit in the form of an acoustic signal, a vibrating signal, an electric current that flows through the body of the person bearing the receiver, etc., or a combination of output signals.

For example, the acoustic signal is adapted to include different types of messages, such as turn left, turn right, go upstairs, downstairs, etc. The modulating signal is an analogue audio signal with a frequency and modulation that make it possible for the signal to be received by a commercial radio receiver. Thus, the visually impaired person can hear the name of the destination of the path he or she is following using a commercial radio device.

The receiver 13 can modify the level, frequency and repetition period of the notification signals supplied in order to indicate to the receiver-bearer the distance to the guide conductor 12.

The size and weight of the receiver 13 are reduced, and may be carried by visually impaired persons in their hand or pocket, or hung around their neck, connected to their belt, etc. Likewise, the receiver 13 can be attached to walking canes for visually impaired persons.

In order to reduce the power consumption of the receiver 13, the receiver includes a unit for turning the device on and off, with the unit turning on when the visually impaired person enters a public area or infrastructure in which a transmitter of the assistance device is installed.

The transmitter 11 also comprises a guidance selection unit, i.e. the transmitter 11 is adapted to supply electrical current to various guide conductors 12 that are installed on a specific path of the public space.

In certain areas of the public space there may be tactile information points installed for various selectable paths, so that the visually impaired person can select the path he or she would like to take, i.e. guide conductors 12 that will be followed by the person making the selection. At the information point, the visually impaired person can program the receiver 13 to adhere only to the path that has been selected.

The assistance device can work in conjunction with a podotactile system to guide a visually impaired person safely along a path. For example, in a metro station, the podotactile system is installed near the edge of the platform and guide conductors are installed on the walls of the station so that the area is demarcated on one side by the podotactile system and on the other side by the guide conductors 12, defining a safe area in which the partially or fully visually impaired person may move around safely.

## Claims

1. **A mobility assistance device** for persons who are partially or fully visually impaired; **characterised in that** the assistance device consists of a loop of parallel electrical guide conductors (12) located along the path a visually impaired person wishes to travel in public spaces, with the loop (12) adapted to conduct an alternating electrical current; a magnetic receiver (13) adapted to supply an information signal based on the magnetic field measured by the magnetic receiver (13).

2. **Device** according to claim 1; where the parallel electrical conductor loop (12) is connected to an alternating current transmitter (12).

3. **Device** according to claim 1; where the loop (12) comprises a series of divided rectilinear electrical guide conductors located along the walkable public space.

4. **Device** according to claim 3; where the electrical guide conductors (12) are spaced apart from each other at a predetermined distance.

5. **Device** according to claim 4; where the guide conductors (12) are adapted to be installed on the ground, on the ceiling or on a wall of a public space of the transport station, airports, public building, or similar type.

6. **Device** according to claim 1; where the transmitter (11) is connected to various sets of guide conductors (12) to define different paths that may be travelled by fully or partially visually impaired persons.

7. **Device** according to claim 6; where a transmitter (11) is adapted to supply alternating current to various paths sequentially.

8. **Device** according to claim 1; where the transmitter (11) is adapted to modulate the alternating current supplied to transmit predetermined information to the receiver (13).

9. **Device** according to claim 8; where the receiver (13) is adapted to receive modulated alternating current, supplying a notification signal based on the modulation detected.

10. **Device** according to claim 9; where the modulating signal is an analogue audio signal with a frequency and modulation that make it possible for the signal to be received by a commercial radio receiver.

11. **Device** according to claim 1; where the magnetic receiver (13) comprises an antenna adapted to receive the magnetic field that is generated, and it is connected to a measuring module with an output that is connected electronically to an output interface.

12. **Device** according to claim 11; where the magnetic receiver (13) comprises an output interface adapted to provide an information signal based on the perceptive capacity of the partially or fully visually impaired person carrying the magnetic receiver.

13. **Device** according to claim 11; where the information signal is of the acoustic or vibrating type, or an electric current that flows through the body of the person carrying the receiver, or a combination of the aforementioned output signals.

14. **Device** according to claim 11; where the antenna is a resonant antenna electrically connected to an input terminal of the meter.

15. **Device** according to claim 14; where the resonant antenna is electrically connected to an input terminal of an amplifier included in the meter.

16. **Device** according to claim 1; where the receiver (13) can be attached to walking canes for visually impaired persons.

17. **Device** according to claim 1; where the assistance device is adapted to work together with a podotactile system to define a safe area in which the partially or fully visually impaired person may move around safely.
